# EUROPEAN PATENT SPECIFICATION

(11) **EP 2 885 962 B1**
(45) Date of publication and mention of the grant of the patent: **01.08.2018**
(21) Application number: 14197215.8
(22) Date of filing: 10.12.2014
(51) Int. Cl.: A01G 3/037

(54) **Safety device for a portable electric cutting tool**
Sicherheitsvorrichtung für ein tragbares elektrisches Schneidwerkzeug
Dispositif de sécurité pour un outil de coupe électrique portable

(30) Priority: 17.12.2013 IT PD20130343
(43) Date of publication of application: 24.06.2015
(73) Proprietor: Zanon S.R.L., 35011 Campodarsego PD (IT)
(72) Inventor: Zanon, Franco, 35011 Campodarsego PD (IT)
(74) Representative: Modiano, Micaela Nadia

(56) References cited:
- DE-A1-102004 015 976
- FR-A1- 2 712 837
- FR-A1- 2 846 729
- FR-A1- 2 963 081

## Description

The present invention relates to a safety device for a portable electric cutting tool.

Nowadays portable gardening and farming tools are known for the pruning of plants, with electric starting, actuation and stopping of the cutting tool, which for an electric shears consists of a scissors provided with one fixed blade and one movable blade, the latter commanded and controlled electrically.

The safety devices according to the invention which are described in this document, although conceived for gardening and farming, can also be used for other uses in which the use is envisioned of electric cutting tools.

Typically, a complete portable apparatus comprises a tool, constituted by a utensil and by an electric motor that actuates the utensil, in the case in question a shears, and a battery for supplying power to the electric motor.

The battery is a transportable body, for example in adapted backpacks, and is connected to the tool by way of electric power supply cables.

Nowadays in the sector cutting tools are known which are capable of controlling the movement of the movable blade and its actuation, thanks to adapted control means of the movement of the blade, such as for example an electronic card, a microcontroller, etc.

For a correct operation of the tool, it is necessary that the battery supply power and voltage in accordance with the operating parameters of the tool in use.

For a tool provided with the above mentioned components, the electric cable connecting the battery to the tool carries at least wires for signaling, wires for the microcontroller, and wires for the motor.

This technology makes it possible to command and control, constantly and with precision, the movement of the movable blade. However, it does not satisfy the requirement, which is by now widely felt in the sector, of being able to effect the immediate stop of the utensil if the electric cable accidentally falls between its blades during use of the tool.

For the purposes of safety, it is important to solve the problem of the accidentally cutting both the electric cable and of any part of the body of the user, in particular the hands which are the parts most at risk during pruning with shears.

During the pruning of plants the movement of the electrically-commanded movable blade can represent a hazard for the user, in that, when moving about in the pruning environment or moving branches or the like with a free hand that is not holding the tool, it can inadvertently happen that the electric cable or one or more fingers of the hand will come between the two blades of the shears, with the consequence that the successive immediate movement of the movable blade results in the cutting of the electric cable or the injury, possibly serious, of the hand.

If the electric cable is cut, this will cause the wires for the electric motor to short-circuit with the wires of the microcontroller or with the wires for signaling, which carry a lower voltage than the wires for the motor.

FR-2 712 837 discloses a device having a combination of features as set forth in the pre-characterizing portion of the appended claim 1.

The aim of the present invention is to solve the above safety problem, by providing a safety device for a portable cutting tool, such as for example electric shears, which eliminates the dangers of cutting the electric cable and of accidental injury to the users.

Within this aim, an object of the invention is to provide a safety device that is capable of ensuring the locking of the movable blade, if bodies that must not be cut come to accidentally be between the movable blade and the fixed blade.

Another object of the invention is to provide a safety device that is structurally simple and easy to use, and which can be implemented at low cost.

In accordance with the invention, there is provided a safety device for a portable electric cutting tool, as defined in the appended claims.

Further characteristics and advantages of the invention will become better apparent from the description of a preferred, but not exclusive, embodiment of the safety device according to the invention, which is illustrated by way of non-limiting example in the accompanying drawings wherein:
- Figure 1 shows an example of a safety device according to the invention for an electric cable of an electric shears;
- Figure 2 is an enlarged cross-sectional view of the electric cable with the safety device according to the invention;
- Figure 3 is another example of a safety device according to the invention, applied to a glove;
- Figure 4 is a cross-sectional view of the glove in Figure 3.

With reference to the figures, the safety device according to the invention is generally designated with the reference numeral 10.

In the example described and illustrated, the portable electric cutting tool 11 is an electric shears, which comprises a cutting portion 12 with a fixed blade 13 and a movable blade 14 that is actuated by an electric motor 15 powered by a battery to which it is connected by way of an electric cable 16.

The safety device 10 substantially covers the body to be protected 17 from cutting by wrapping around it and to this end it comprises a shielding layer 18 made of conducting material.

In particular, the shielding layer 18 consists of a weave made of such conducting material, which is preferably copper.

In the example described and illustrated, the safety device 10 also comprises a conducting sheet 19 (in other versions of the invention this may not be present), which is substantially a sheet of aluminum which is interposed between the body to be protected 17 and the shielding layer 18.

Advantageously, either the movable blade 14 or the shielding layer 18 is arranged at a constant and different potential with respect to the other of the two, which is connected to means 20 for detecting the potential and for controlling the movement of the movable blade 14, for example a microcontroller, in order to lock it in the event of variation of the potential of the movable blade 14 or of the shielding layer 18 at the input of the potential detection and motion control means 20 to which one of the two is connected.

In particular, either the movable blade 14 or the shielding layer 18 is preferably arranged at ground potential, while the other of the two is connected at the input of the potential detection and motion control means 20.

Alternatively, either the movable blade 14 or the shielding layer 18 is arranged at a supply potential of the potential detection and motion control means 20, which in the particular case of the microcontroller can be for example 3.3 V, while the other of the two is connected to the input of the potential detection and motion control means 20.

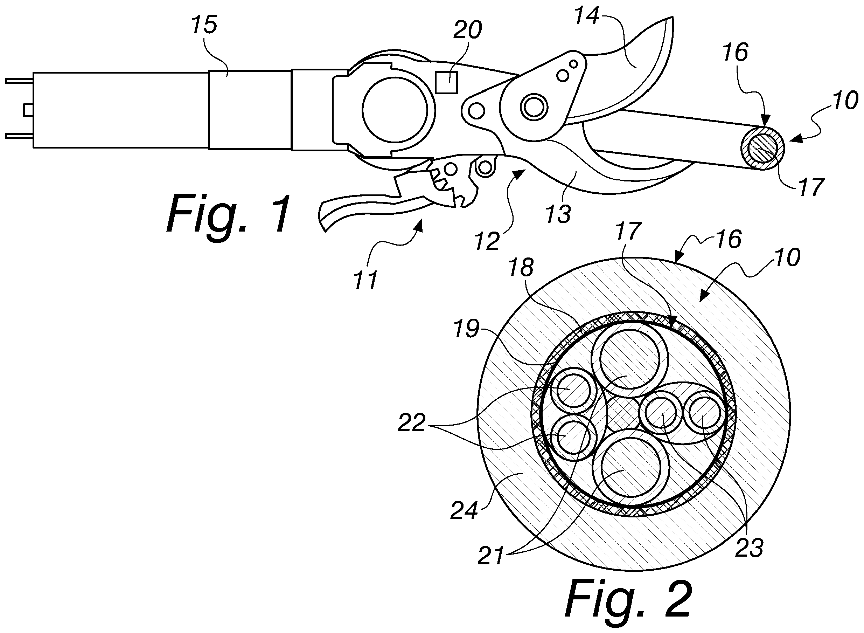

As can clearly be seen in Figure 1, the body to be protected 17 from cutting is constituted by the group of wires inside the electric cable 16.

The enlargement in Figure 2 shows in fact that the electric cable 16 internally comprises a first pair of wires 21 of greater cross-section for supplying power to the electric motor 15, at a voltage that can be for example 58.8 V at peak, a second pair of wires 22 of smaller cross-section for supplying power to the microcontroller, for example with a voltage of 3.3 V, and a third pair of wires 23 for signaling.

Figure 2 also clearly shows that the electric cable 16 is advantageously provided with a safety device 10 that covers the body to be protected 17 (i.e. the group of wires inside it) by wrapping around it. In particular, it should be noted that this is wound, in succession, by the conducting sheet 19, by the shielding layer 18 and finally by an insulating sheath 24.

In a possible version, the shielding layer 18 is arranged at ground potential or at the supply potential of the microcontroller, while the movable blade 14 is connected to an input of the microcontroller, which reads its potential while the output controls its movement.

Alternatively, the movable blade 14 can be arranged at ground potential or at the supply potential of the microcontroller, while the shielding layer 18 is connected to the input of the microcontroller.

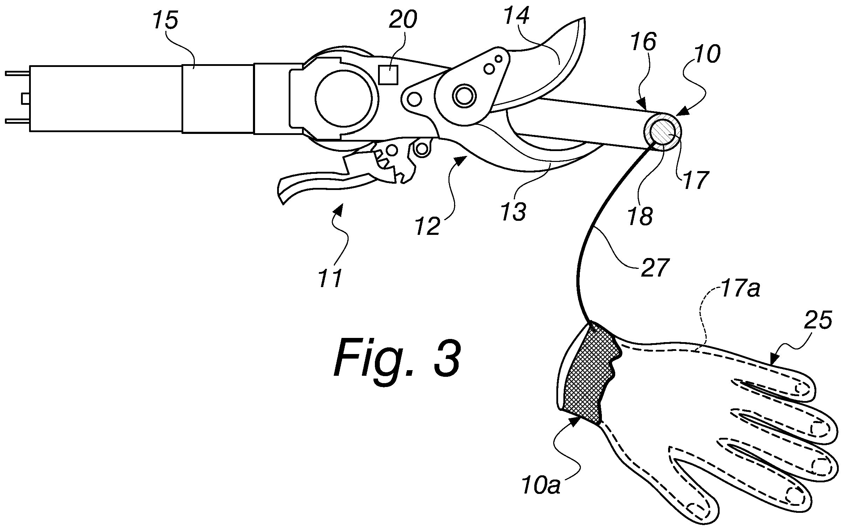

Figure 3 shows another example of a safety device, designated with the reference numeral 10a in order to distinguish it from the safety device 10 of the electric cable 16. This is provided according to the same inventive concept described previously for the safety device 10 of the electric cable 16 and consists of a part of a glove 25 for the protection of the hand of the user, indicated as the body to be protected 17a.

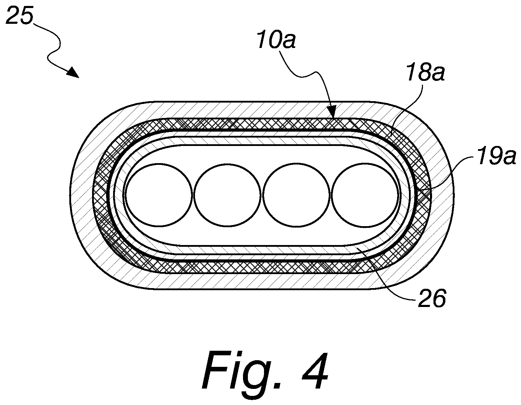

As can clearly be seen in the cross-section in Figure 4, the glove 25, which with the safety device 10a covers the hand by wrapping around it, comprises in the example a lining 26 around which there are in succession the conducting sheet 19a (which in other versions may not be present) and the shielding layer 18a.

The shielding layer 18a of the safety device 10a of the glove 25 is advantageously connected with a wire 27 to the shielding layer 18 of the safety device 10, so that it takes the same specified potential as in the previous example.

Operation of the safety device, according to the invention, is the following.

If the electric cable 16 or the hand, or a part thereof, which is covered by the glove 25 should be interposed between the two blades of the cutting portion 12 of the portable electric tool 11 in operation, as soon as the movable blade 14 touches the shielding layer 18 or 18a, the input of the potential detection and motion control means 20 (specifically the input of the microcontroller) to which it or the shielding layer 18 are connected will be modified, in its potential value, and the variation will result in the command to shut down the electric motor 15 thus locking the movement of the movable blade 14.

Since the locking is not immediate, advantageously the safety device 10 and 10a comprises the conducting sheet, respectively 19 and 19a, which substantially makes it possible to increase the thickness of the safety device 10 or 10a, for a higher level of safety.

In practice it has been found that the invention fully achieves the intended aim and objects, by providing a safety device that is capable of solving the problems of safety of the portable cutting tool, by eliminating the danger of injury.

The safety device is in fact capable of ensuring the locking of the movable blade if bodies that must not be cut, such as the electric cable or a part of the human body, in particular the hand or a part thereof, come to accidentally be between the movable blade and the fixed blade.

Another advantage of the safety device according to the invention is that it is structurally simple and easy to use, and can also be reproduced for other bodies to be protected in addition to those described and is also usable in different sectors from those of gardening and farming, in which the use is required of portable cutting tools with electric motor powered by a battery that is connected to it by way of an electric cable.

Another advantage of the safety device according to the invention is that it can be produced at low cost and with conventional technologies.

The invention, thus conceived, is susceptible of numerous modifications and variations, within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A safety device (10, 10a) for a portable electric cutting tool (11), of the type comprising a cutting portion (12) with a movable blade (14) that is actuated by way of an electric motor (15) powered by a battery to which it is connected by way of an electric cable (16), said safety device (10) comprising a shielding layer (18, 18a) made of conducting material with which it covers a body to be protected (17, 17a) from cutting, either said movable blade (14) or said shielding layer (18, 18a) being arranged at a constant and different potential with respect to the other of the two, which is connected to means (20) for detecting the potential and for controlling the movement of said movable blade (14) in order to lock it in the event of variation of the potential of said movable blade (14) or of said shielding layer (18, 18a) at the input of said potential detection and motion control means (20) to which one of the two is connected, said shielding layer (18, 18a) consisting of a weave of conducting metallic material, the safety device being **characterized in that** it comprises a conducting sheet (19, 19a) made of metallic material, which is interposed between said body to be protected (17, 17a) and said shielding layer (18, 18a).

2. The safety device according to claim 1, **characterized in that** either said movable blade (14) or said shielding layer (18, 18a) is arranged at ground potential and the other of the two is connected to said potential detection and motion control means (20).

3. The safety device according to claim 1, **characterized in that** either said movable blade (14) or said shielding layer (18, 18a) is arranged at a supply potential of said potential detection and motion control means (20) and the other of the two is connected to the input of said potential detection and motion control means (20).

4. The safety device according to one or more of the preceding claims, **characterized in that** said shielding layer (18, 18a) covers said body to be protected (17, 17a), by wrapping around it.

5. The safety device according to one or more of the preceding claims, **characterized in that** it comprises, in succession around said body to be protected (17), said conducting sheet (19), said shielding layer (18) and externally an insulating sheath (24).

6. The safety device according to one or more of the preceding claims, **characterized in that** it comprises, in succession around said body to be protected (17a), said conducting sheet (19a) and said shielding layer (18a).

7. The safety device according to one or more of the preceding claims, **characterized in that** said shielding layer (18, 18a) is a weave made of copper, and said conducting sheet (19, 19a) a sheet of aluminum.

8. The safety device according to one or more of the preceding claims, **characterized in that** it comprises a first said safety device (10) of an electric cable (16) and a second said safety device (10a) of a glove (25) for protecting the hand of a user, and wire (27) electrically connected between the shielding layer (18) of the first safety device (10) and the shielding layer (18a) of the second safety device (10a).

## Patentansprüche

1. Eine Sicherheitsvorrichtung (10, 10a) für ein tragbares elektrisches Schneidwerkzeug (11) von der Art, die einen Schneidabschnitt (12) mit einer beweglichen Klinge (14) umfasst, die durch einen Elektromotor (15) angetrieben wird, der durch eine Batterie, über ein Stromkabel (16) verbunden, mit Strom versorgt wird, wobei die Sicherheitsvorrichtung (10) eine Schutzschicht (18, 18a) aus leitendem Material umfasst, mit welcher sie einen Körper (17, 17a), der vor einem Schneiden geschützt werden soll, bedeckt, wobei entweder die bewegliche Klinge (14) oder die Schutzschicht (18, 18a) mit einem konstanten und anderen Potential als die jeweils andere angeordnet ist, die mit Mitteln (20) zur Erkennung des Potentials und zur Steuerung der Bewegung der beweglichen Klinge (14) verbunden ist, um sie im Falle einer Schwankung des Potentials der beweglichen Klinge (14) oder der Schutzschicht (18, 18a) am Eingang der Potentialerkennungs-und Bewegungssteuerungsmittel (20) zu blockieren, mit denen eine der beiden verbunden ist; wobei die Schutzschicht (18, 18a) aus einem Gitter von leitendem Metallmaterial besteht, wobei die Sicherheitsvorrichtung **dadurch gekennzeichnet ist, dass** sie eine leitende Schicht (19, 19a) aus Metallmaterial umfasst, die zwischen dem zu schützenden Körper (17, 17a) und der Schutzschicht (18, 18a) angeordnet ist.

2. Die Sicherheitsvorrichtung gemäß Anspruch 1, **dadurch gekennzeichnet, dass** entweder die bewegliche Klinge (14) oder die Schutzschicht (18, 18a) mit Erdpotential verbunden ist und die andere der beiden mit den Potentialerkennungs- und Bewegungssteuerungsmitteln (20) verbunden ist.

3. Die Sicherheitsvorrichtung gemäß Anspruch 1, **dadurch gekennzeichnet, dass** entweder die bewegliche Klinge (14) oder die Schutzschicht (18, 18a) mit einem Versorgungspotential der Potentialerkennungs- und Bewegungssteuerungsmittel (20) verbunden ist und die andere der beiden mit dem Eingang der Potentialerkennungs- und Bewegungssteuerungsmittel (20) verbunden ist.

4. Die Sicherheitsvorrichtung gemäß einem oder mehreren der obigen Ansprüche, **dadurch gekennzeichnet, dass** die Schutzschicht (18, 18a) den zu schützenden Körper (17, 17a) bedeckt, indem sie um ihn herumgewickelt ist.

5. Die Sicherheitsvorrichtung gemäß einem oder mehreren der obigen Ansprüche, **dadurch gekennzeichnet, dass** sie aufeinanderfolgend um den zu schützenden Körper (17) herum die leitende Schicht (19), die Schutzschicht (18) und außen eine Isolierschicht (24) umfasst.

6. Die Sicherheitsvorrichtung gemäß einem oder mehreren der obigen Ansprüche, **dadurch gekennzeichnet, dass** sie aufeinanderfolgend um den zu schützenden Körper (17a) herum die leitende Schicht (19a) und die Schutzschicht (18a) umfasst.

7. Die Sicherheitsvorrichtung gemäß einem oder mehreren der obigen Ansprüche, **dadurch gekennzeichnet, dass** die Schutzschicht (18, 18a) ein Gitter aus Kupfer ist und die leitende Schicht (19, 19a) eine Schicht aus Aluminium ist.

8. Die Sicherheitsvorrichtung gemäß einem oder mehreren der obigen Ansprüche, **dadurch gekennzeichnet, dass** sie eine erste Sicherheitsvorrichtung (10) eines Stromkabels (16) und eine zweite Sicherheitsvorrichtung (10a) eines Handschuhs (25) zum Schützen der Hand eines Benutzers sowie einen Draht (27) umfasst, der elektrisch zwischen der Schutzschicht (18) der ersten Sicherheitsvorrichtung (10) und der Schutzschicht (18a) der zweiten Sicherheitsvorrichtung (10a) angeschlossen ist.

## Revendications

1. Dispositif de sécurité (10, 10a) pour un outil de coupe électrique portable (11) du type comprenant une partie de coupe (12) avec une lame mobile (14) qui est actionnée au moyen d'un moteur électrique (15) alimenté par une batterie à laquelle il est raccordé au moyen d'un câble électrique (16), ledit dispositif de sécurité (10) comprenant une couche de protection (18, 18a) réalisée avec un matériau conducteur avec lequel il recouvre un corps à protéger (17, 17a) de la coupe, ladite lame mobile (14) ou ladite couche de protection (18, 18a) étant agencée à un potentiel constant et différent par rapport à l'autre des deux, qui est raccordée aux moyens (20) pour détecter le potentiel et pour contrôler le mouvement de ladite lame mobile (14) afin de la bloquer en cas de variation de potentiel de ladite lame mobile (14) ou de ladite couche de protection (18, 18a) à l'entrée desdits moyens de détection de potentiel et de contrôle de mouvement (20) auxquels l'une des deux est raccordée, ladite couche de protection (18, 18a) se composant d'un tissage de matériau métallique conducteur, le dispositif de sécurité étant **caractérisé en ce qu'**il comprend une feuille conductrice (19, 19a) réalisée à partir de matériau métallique, qui est intercalé entre ledit corps à protéger (17, 17a) et ladite couche de protection (18, 18a).

2. Dispositif de sécurité selon la revendication 1, **caractérisé en ce que** ladite lame mobile (14) ou ladite couche de protection (18, 18a) est agencée au potentiel de terre et l'autre des deux est raccordée auxdits moyens de détection de potentiel et de contrôle de mouvement (20) .

3. Dispositif de sécurité selon la revendication 1, **caractérisé en ce que** ladite lame mobile (14) ou la couche de protection (18, 18a) est agencée à un potentiel d'alimentation desdits moyens de détection de potentiel et de contrôle de mouvement (20) et l'autre des deux est raccordée à l'entrée desdits moyens de détection de potentiel et de contrôle de mouvement (20).

4. Dispositif de sécurité selon une ou plusieurs des revendications précédentes, **caractérisé en ce que** ladite couche de protection (18, 18a) recouvre ledit corps à protéger (17, 17a), en s'enroulant autour de lui.

5. Dispositif de sécurité selon une ou plusieurs des revendications précédentes, **caractérisé en ce qu'**il comprend, en succession autour dudit corps à protéger (17), ladite feuille conductrice (19), ladite couche de protection (18) et extérieurement une gaine isolante (24).

6. Dispositif de sécurité selon une ou plusieurs des revendications précédentes, **caractérisé en ce qu'**il comprend, en succession autour dudit corps à protéger (17a), ladite feuille conductrice (19a) et ladite couche de protection (18a).

7. Dispositif de sécurité selon une ou plusieurs des revendications précédentes, **caractérisé en ce que** ladite couche de protection (18, 18a) est un tissage réalisé à partir de cuivre, et ladite feuille conductrice (19, 19a) une feuille d'aluminium.

8. Dispositif de sécurité selon une ou plusieurs des revendications précédentes, **caractérisé en ce qu'**il comprend ledit premier dispositif de sécurité (10) d'un câble électrique (16) et ledit second dispositif de sécurité (10a) d'un gant (25) pour protéger la main d'un utilisateur, et un fil (27) électriquement raccordé entre la couche de protection (18) du premier dispositif de sécurité (10) et la couche de protection (18a) du second dispositif de sécurité (10a).
